# EUROPEAN PATENT SPECIFICATION

(11) **EP 4 426 770 B1**
(45) Date of publication and mention of the grant of the patent: **24.09.2025**
(21) Application number: 22813422.7
(22) Date of filing: 25.10.2022
(51) Int. Cl.: C08G 63/183, C08G 63/91

(54) **CONTINUOUS TRANSESTERIFICATION OF POLYALKYLENE TEREPHTHALATE**
KONTINUIERLICHE UMESTERUNG VON POLYALKYLENTEREPHTHALAT
TRANSESTÉRIFICATION EN CONTINU DU POLYALKYLÈNE TÉRÉPHTALATE

(30) Priority: 03.11.2021 EP 21206233
(43) Date of publication of application: 11.09.2024
(73) Proprietor: ACTEGA Rhenania GmbH, 41516 Grevenbroich (DE)
(72) Inventor: WENDRICH, Karolin, 46483 Wesel (DE); GWIASDA, Lukas, 46483 Wesel (DE); HAEGER, Anna, 46483 Wesel (DE); ASKEVOLD, Björn, 46483 Wesel (DE)
(74) Representative: Altana IP Department
(86) International application number: PCT/EP2022/079770
(87) International publication number: WO 2023/078734

(56) References cited:
- WO-A1-2019/229237
- FR-A1- 2 825 701
- JP-A- 2000 191 766
- CASSAGNAU PHILIPPE ET AL: "Synthesis of oligoester diols by alcoholysis of PET through the reactive extrusion process", CANADIAN JOURNAL OF CHEMICAL ENGINEERING, WILEY SUBSCRIPTION SERVICES, INC., A WILEY COMPANY, vol. 80, 1 December 2002 (2002-12-01), pages 1075 - 1082, XP002806125, ISSN: 0008-4034, DOI: 10.1002/CJCE.5450800609
- MOHSIN MAHMOUD A ET AL: "Reactive extrusion of polyethylene terephthalate waste and investigation of its thermal and mechanical properties after treatment", INTERNATIONAL JOURNAL OF CHEMICAL ENGINEERING, HINDAWI PUBLISHING CORPORATION, US, vol. 2017, 1 January 2017 (2017-01-01), pages 1 - 10, XP002806127, ISSN: 1687-806X, DOI: 10.1155/2017/5361251
- COLOMINES GAËL ET AL: "Study of polyurethane formulations containing diols obtained via glycolysis of poly(ethylene terephthalte)(PET) by oligoesters diols through a reactive extrusion process", MACROMOLECULAR MATERIALS AND ENGINEERING, WILEY VCH VERLAG, WEINHEIM, DE, vol. 290, no. 7, 1 January 2005 (2005-01-01), pages 710 - 720, XP002806126, ISSN: 1438-7492, DOI: 10.1002/MAME.200400391

## Description

The present invention relates to a continuous transesterification process and to the use of a composition.

Terephthalate polyester resins like polyalkylene terephthalate (PE) are thermoplastic polymers which are widely used in the plastics industry. PE is used in the manufacturing of film, bottles and plastic containers of all kinds. It is also used in the manufacturing of fabrics and textile materials.

Terephthalate polyester resins might be produced via polycondenstation of the corresponding monomers or via transesterification of polyesters, usually in batch reactors as described e. g. in US 4,849,465. However, the (transesterification) production in batch reactors is time consuming and it is also difficult to handle the corresponding process which is also caused by the high viscosity of the used PE transesterification educts.

An improvement concerning handling and efficiency is normally the use of continuous reactors (for the transesterification).

A special production (by transesterification) in such a continuous reactor is described in WO2019229237. It is proposed to perform the transesterification reaction in an extruder. The relevant process also works in the absence of solvent. However, the products which are received by the described extruder production process are generally not appropriate for many applications (like food packaging). Furthermore, according to the said extruder process it only works satisfactorily if as polyester educts exclusively polyalkylene terephthalate types are used. Thus, the flexibility of this process is also limited because the corresponding utilization of other polyester type educts does not work sufficiently.

However, such a flexibility concerning the selection of the educts facilitates the production of product mixtures with desired properties (like glass transition temperature/ crystallinity and polarity). FR2825701 A1 discloses a continuous process for the transesterification (i.e. glycolysis) of polyethylene terephthalate (PET) using a reactive extrusion process. Further, Example 1 and Figure 3 disclose a three-step process, nemaly i) a pre-product of PET, ethylene glycol (boiling point 197,3°C) and dibutyl tin oxide catalyst are introduced into an extruder ii) followed by the transesterification reaction in the extruder and (iii) discharge of the resultant product. In the pre-product, 100% of the carboxylic ester groups are provided by the PET and 100 % of the diol groups are provided by ethylene glycol of boiling point 197,3°C.

It is an object to the present invention to provide an economical process for the transesterification of polyalkylene terephthalate (PE). The received transesterification product should be of high quality and should be also appropriate concerning the food packing application.

The solution to this problem is a continuous transesterification process which is performed in an extruder comprising the steps of:
step 1): the components of a pre-product are introduced into the extruder, which are at least present as
   i) polyalkylene terephthalate (PE),
   ii) diol (DO) having an atmospheric pressure boiling point below 235 °C and
   iii) transesterification catalyst (TC),
   with the proviso that the overall composition of the pre-product which refers to its components added per unit of time fulfills the following requirements:
   4.0 - 10.4 mol/kg carboxylic acid ester functional groups and 4.0 - 20.8 mol/kg hydroxyl groups are provided per unit of time,
   20 - 100 mol % of the provided carboxylic acid ester functional groups are contributed by the polyalkylene terephthalate (PE),
   5 - 100 mol % of the provided hydroxyl groups are contributed by the diol (DO) having a boiling point below 235 °C;
step 2): reacting the introduced components in a reacting zone of the extruder to generate a transesterification mixture and
step 3): discharging the transesterification mixture generated in step 2).

The invention also relates to the use of a composition (PR) having 4.0 - 10.4 mol/kg carboxylic acid ester functional groups and 4.0 - 20.8 mol/kg hydroxyl groups comprising:
i) polyalkylene terephthalate (PE),
ii) diol (DO) having an atmospheric pressure boiling point below 235 °C and
iii) transesterification catalyst (TC), wherein

20 - 100 mol % of the contained carboxylic acid ester functional groups are provided by the polyalkylene terephthalate (PE) and 5 - 100 mol % of the contained hydroxyl groups are provided by the diol (DO) having a boiling point below 235 °C;
as a pre-product in a continuous transesterification process which is performed in an extruder.

The process (and the use) according to the invention enables short residence times, so that even relatively small amounts of product can be produced in an economical manner. According to the present invention also high-viscosity polyesters might be reacted with the (relatively) low-boiling polyols. The process according to the present invention has a low energy requirement because the reaction can also be carried out at lower temperatures than in a conventional continuous reactor (because extruder reactors require only a slight softening of the viscous polyester educts, which means that lower temperatures are needed).

As already mentioned above, the reaction in the extruder makes it possible to process or react the highly viscous polyesters even at relatively low temperatures, which means that the end product is spared (high temperatures usually lead to decomposition reactions, which deteriorates the product quality). According to the invention, waste PE can also be used as starting materials, whereby not only recycling but even upcycling can be achieved.

The received transesterification products are generally of high quality and might be used for direct and indirect food contact applications.

It is not necessary to pre-mix educts and catalyst before introducing into the extruder. It is also possible to feed said components at different spatial locations into the extruder so that the components might be mixed for the first time within the extruder.

Furthermore, the process according to the present invention is flexible concerning the educts to be used: It is not only possible to use polyalkylene terephthalate as polyester but e. g. additionally also other dicarbon acid based polyester types.

According to a special embodiment in this connection methyl esters are additionally used. Methyl esters show a high reactivity, wherein methanol is generated during the reaction which is easy (and also completely) removeable by evaporation. According to this embodiment, less than 100 mol % of the carboxylic acid ester functional groups were contributed by the polyalkylene terephthalate (PE) and wherein carboxylic ester functional groups were additionally contributed by the use of methyl esters. In this case, typically 5 - 80 mol %, preferably 5 - 50 mol % of the provided carboxylic acid ester functional groups are contributed by methyl esters. An appropriate methyl ester is e. g. dimethyl isophthalate.

The process in case said educts were not pre-mixed before fed into the extruder (individual feed of relevant educts):
According to a preferred embodiment 4.5 - 9.5 mol/kg carboxylic acid ester functional groups and 3.0 - 15.0 mol/kg hydroxyl groups are provided per unit of time and 50 - 100 mol % of the provided carboxylic acid ester functional groups are contributed by the polyalkylene terephthalate (PE) and 20 - 100 mol % of the provided hydroxyl groups are contributed by the diol (DO) having a boiling point below 235 °C.

In a preferred embodiment to the invention the relevant educts (and preferably also the catalyst) were introduced into the extruder (reactor) through a feeding zone (preferably in a pre-mixed way).

The process in case the relevant educts were pre-mixed before fed into the extruder - use of the pre-mixed composition (PR):
According to a special embodiment in a step before step 1) the components of the pre-product are pre-mixed so that in step 1) a composition (PR) is introduced into the extruder having 4.0 - 10.4 mol/kg carboxylic acid ester functional groups and 0.1 - 20.8 mol/kg hydroxyl groups comprising:
i) polyalkylene terephthalate (PE),
ii) diol (DO) having an atmospheric pressure boiling point below 235 °C and
iii) transesterification catalyst (TC), wherein
20 - 100 mol % of the contained carboxylic acid ester functional groups are provided by the polyalkylene terephthalate (PE) and 5 - 100 mol % of the contained hydroxyl groups are provided by the diol (DO) having a boiling point below 235 °C.

Referring to the preferred (pre-mixed) composition (PR):
Typically, the composition (PR) has 4.5 - 9.5 mol/kg carboxylic acid ester functional groups and 3.0 - 15.0 mol/kg hydroxyl groups and 50 - 100 mol % of the contained carboxylic acid ester functional groups are provided by the polyalkylene terephthalate (PE) and 20 - 100 mol % of the contained hydroxyl groups are provided by the diol (DO) having a boiling point below 235 °C.

Referring to the continuous transesterification process according to the present invention and to the use according to the present invention:
Normally, the intrinsic viscosity of the polyalkylene terephthalate (PE) is 0.40 - 0.98, preferably 0.70 - 0.85 (DIN EN ISO 1628-5).

The PE might be used as melt (which is preferred) or in a solution (dissolved in solvents). Typically, the amount of solvent in such a melt is lower than 20 wt. % but preferably no solvent is used (in the melt).

Furthermore, additives (e. g. rheology additives) might be used in order to perform the process according to the present invention.

Often at least 20 wt.%, preferably at least 40 wt. % of the species of the polyalkylene terephthalate (PE) are provided by polyethylene terephthalate (PET).

Preferably, at least 5 wt.%, preferably at least 10 wt. % of the species of the diol (DO) have an atmospheric pressure boiling point below 215 °C.

The usage of low boiling polyols (especially below said 215 °C) is normally advantageous for the properties of the synthesized polyester.

Typically, at least 5 wt.%, preferably at least 10 wt. % of the species of the diol (DO) are provided by 2,2-diemethyl propane-1,3-diol (NPG).

The use of such low boiling diols generally has an influence concerning the quality of the polymeric end product: it is possible to adjust solubility, compatibility, physical hardness and flexibility. Normally, e. g. crystallinity and flexibility can be fine-tuned if low boiling diols are used instead of - or in addition to - corresponding higher boiling diols.

Preferably, species of the transesterification catalyst (TC) are provided by a lewis-acid.

Generally said lewis acid might be selected from titanium compounds, zinc compounds, antimony compounds, zirconium compounds, germanium compounds, ionic liquids and lead compounds. In a most preferred embodiment of the invention, the transesterification catalyst is selected from zinc acetate and tetra-n-butyl titanate (TNBT).

According to a preferred embodiment, the transesterification is performed at temperatures of 240 - 310 °C, preferably at 260 - 290 °C.

Typically, the extruder is a twin screw extruder.

Especially, in appropriate extruder types a high surface area and an enhanced heat transfer allow a fast reaction.

Normally, the residence time of the PE in the extruder is 1 - 20 minutes, preferably 2 - 8 minutes. The residence time is determined optically (by human eye): At all spatial locations where PE is fed into the extruder, 1 g of PE is fed in (each once and at the same time), which contains 1 percent by weight of (pre-mixed in the PE) carbon black powder. It is determined when the black color becomes visible (lower limit) and when the black color is no longer visible (upper limit) - where the product outlet(s) of the extruder is monitored optically. The time difference between the upper limit and the lower limit corresponds to the residence time.

In many cases during the transesterification process in the extruder volatile components are generated which are preferably vacuum-removed (e.g. methanol if methyl esters were used). In this case the used extruder reactor normally works under reduced pressure.

Preferably, the transesterification process is performed in the absence of any solvent being not a transesterification-reactive component.

Typically, the transesterification mixture discharged in step 3) is used in a further step as a binder for coatings or as a lamination adhesive, preferably for the manufacturing of food packaging.

The present invention is further described below by using examples.

### Trials

The experiments were performed using a Brabender Co-Rotating Clamshell Twin Screw Extruder Model with 3 independent heating zones. The screw design consists of forward and reverse conveying elements, forward and reverse kneading blocks, and teeth elements. Polyethylene terephthalate (PET) (Indorama), dimethyl isophthalate (DMI), 2,2-Dimethylpropane-1,3-diol (NPG), [4-(hydroxymethyl)cyclohexyl]methanol (CHDM) and the catalyst tetra-n-butyl titanate (TNBT) (VWR) were premixed and fed through a single spiral screw feeder. When the amount of the catalyst is given in weight%, such amount is calculated based on the total weight of the components. All materials were dosed through a 1 L stainless steel hopper.

### Performance in said twin screw extruder

### Composition

The following materials are used in the experiments 1 - 3

**Table 1: Educt composition of example 1 - 3**

| **Compound** | **quantity (amount) [wt.%]** |
|---|---|
| "Ramapet N180" (PET): Intrinsic viscosity dl/g 0.80 ± 0.02; Bulk Density Poured 830 kg/m3; Glass transition point Tg (dry) 78 ± 2 | 34 |
| Dimethyl isophthalate (DMI) | 34 |
| [4-(hydroxymethyl)cyclohexyl]methanol (CHDM) (atmosheric boiling point higher than **260** °C) | 10 |
| 2,2-Dimethylpropane-1,3-diol (NPG) (atmospheric boiling point 208 °C) | 22 |

Properties of the educt mixture:
- 6.1 mol/kg carboxylic acid ester functional groups and 9.57 mol/kg hydroxyl groups;
- 50 mol % of the contained carboxylic acid ester functional groups are provided by the polyalkylene terephthalate (PET)
- 75 mol % of the contained hydroxyl groups are provided by NPG

The mixture is feed via the single screw feeder with a dosing rate of 0.1 kg/h.

The residence time of the PE in the extruder is 3.2 minutes, where the temperature profile in the extruder is shown in table 2.

The resulting polyol modified PET exited the extruder as a melt and was collected into cans and cooled at ambient conditions.

### a. Test series

**Table 2: test series on benchtop extruder.**

| **Example** | **unit** | **1** | **2** | **3** |
|---|---|---|---|---|
| Catalyst amount | wt.% | 0.4 | 0.4 | 0.4 |
| Temp. heat zone 1 | °C | 280 | 280 | 280 |
| Temp. heat zone 2 | °C | 290 | **300** | **315** |
| Temp. heat zone 3 | °C | 290 | **300** | **315** |
| Rotation speed rpm | min⁻¹ | 50 | 50 | 50 |
| Solubility in THF | | good | very good | very good |

Due to the use of the lower boiling diol (NPG) the received product has a relative low crystallinity and a sufficient flexibility which gives this product the properties required for use as a lamination adhesive.

### Analytical results

The clear products of example 1-3 are soluble in THF. The obtained resins were characterized by GPC and the acid no. was determined. ¹H, ¹³C, COSY, and ¹H-¹³C HMQC NMR was measured in CDCl₃.

**Table 3: analytical results.**

| **Sample** | **M_{w} [g/mol]** | **Mₙ [g/mol]** | **PDI** |
|---|---|---|---|
| Sample 1 | 2846 | 1503 | 1.9 |
| Sample 2 | 3326 | 1690 | 2.0 |
| Sample 3 | 4750 | 2268 | 2.1 |

Examples 1-3 demonstrate that the temperature can be used to control the molecular weight of the resulting modified polyester resin. Higher temperatures gave material with higher molecular weight. ¹H, ¹³C, COSY, and ¹H-¹³C HMQC NMR results of the material show the presence of mono and diester of EG, NPG and CHDM. Only traces of free dimethyl isophthalate could be detected.

Examples 1-3 demonstrate that dimethyl ester of carbon acids can be used to produce modified polyesters containing not only terephthalic acid.

### Measurements

GPC measurement were performed using Agilent Infinity 1260 GPC. The Infinity GPC is equipped with Degasser, isocratic pump, autosampler, refractive index detector and 2 lined up mixed D columns thermostated at 40 °C. The solvent used is stabilized tetrahydrofuran (THF) ≥99.7% with a flow rate of 1 mL/min. Analysis were performed with Agilent Chemstation software. Reference samples of polystyrene purchased from Agilent are used to develop a calibration curve. The standards range in molecular weight of 500 to 30,000 Daltons. The calibration curve was second order fitted with a r-value of 0.998.

Samples to be analyzed are first dissolved in THF (30 mg/mL). The sample is then filtered through a 2 mL syringe with a 0.45 micron filter housing. A volume of 0.1 microliters is injected.

¹H, ¹³C COSY, ¹H-¹³C HMQC NMR spectra were measured in CDCl₃ using 500 MHz NMR Bruker with gryo head.

### LIST of ABREVIATIONS

- CHDM: Cyclohexanedimethanol
- DMI: Dimethyl isophthalate
- EG: Ethylene glycol
- GPC: gel permeation chromatography
- Mₙ: number average molecular weight
- M_{w}: weight average molecular weight
- NPG: Neopentylglycol
- PET: polyethylentherephtalate
- PDI: Polydispersity index
- RPM: revolutions per minute
- TEG: Triethylene glycol
- THF: tetrahydrofuran
- TNBT: tetra-n-butyl titanate

## Claims

1. Use of a composition (PR) having 4.0 - 10.4 mol/kg carboxylic acid ester functional groups and 4.0 - 20.8 mol/kg hydroxyl groups comprising:
i) polyalkylene terephthalate (PE),
ii) diol (DO) having an atmospheric pressure boiling point below 235 °C and
iii) transesterification catalyst (TC), wherein
20 - 100 mol % of the contained carboxylic acid ester functional groups are provided by the polyalkylene terephthalate (PE) and 5 - 100 mol % of the contained hydroxyl groups are provided by the diol (DO) having an atmospheric boiling point below 235 °C;
as a pre-product in a continuous transesterification process which is performed in an extruder.

2. A continuous transesterification process which is performed in an extruder comprising the steps of:
step 1): the components of a pre-product are introduced into the extruder, which are at least present as
i) polyalkylene terephthalate (PE),
ii) diol (DO) having an atmospheric pressure boiling point below 235 °C and
iii) transesterification catalyst (TC),
with the proviso that the overall composition of the pre-product which refers to its components added per unit of time fulfills the following requirements:
4.0 - 10.4 mol/kg carboxylic acid ester functional groups and 4.0 - 20.8 mol/kg hydroxyl groups are provided per unit of time,
20 - 100 mol % of the provided carboxylic acid ester functional groups are contributed by the polyalkylene terephthalate (PE),
5 - 100 mol % of the provided hydroxyl groups are contributed by the diol (DO) having an atmospheric pressure boiling point below 235 °C;
step 2): reacting the introduced components in a reacting zone of the extruder to generate a transesterification mixture and
step 3): discharging the transesterification mixture generated in step 2).

3. A continuous transesterification process according to claim 2, wherein 4.5 - 9.5 mol/kg carboxylic acid ester functional groups and 3.0 - 15.0 mol/kg hydroxyl groups are provided per unit of time and 50 - 100 mol % of the provided carboxylic acid ester functional groups are contributed by the polyalkylene terephthalate (PE) and 20 - 100 mol % of the provided hydroxyl groups are contributed by the diol (DO) having an atmospheric boiling point below 235 °C.

4. A continuous transesterification process according to claim 2, in which in a step before step 1) the components of the pre-product are pre-mixed so that in step 1) a composition (PR) is introduced into the extruder having 4.0 - 10.4 mol/kg carboxylic acid ester functional groups and 4.0 - 20.8 mol/kg hydroxyl groups comprising:
i) polyalkylene terephthalate (PE),
ii) diol (DO) having an atmospheric pressure boiling point below 235 °C and
iii) transesterification catalyst (TC), wherein
20 - 100 mol % of the contained carboxylic acid ester functional groups are provided by the polyalkylene terephthalate (PE) and 5 - 100 mol % of the contained hydroxyl groups are provided by the diol (DO) having an atmospheric boiling point below 235 °C.

5. Use of a composition (PR) according to claim 1 or a continuous transesterification process according to claim 4, where the composition (PR) has 4.5 - 9.5 mol/kg carboxylic acid ester functional groups and 3.0 - 15.0 mol/kg hydroxyl groups and 50 - 100 mol % of the contained carboxylic acid ester functional groups are provided by the polyalkylene terephthalate (PE) and 20 - 100 mol % of the contained hydroxyl groups are provided by the diol (DO) having an atmospheric boiling point below 235 °C.

6. Use of a composition (PR) according to claims 1 or 5; or a continuous transesterification process according to claims 2 - 5, where the *intrinsic* viscosity of the polyalkylene terephthalate (PE) is 0.40 - 0.98, preferably 0.70 - 0.85 (DIN EN ISO 1628-5).

7. Use of a composition (PR) according to claims 1, 5 or 6; or a continuous transesterification process according to claims 2 - 6, wherein at least 20 wt.%, preferably at least 40 wt. % of the species of the polyalkylene terephthalate (PE) are provided by polyethylene terephthalate (PET).

8. Use of a composition (PR) according to claims 1 or 5 - 7; or a continuous transesterification process according to claims 2 - 7, wherein at least 5 wt.%, preferably at least 10 wt. % of the species of the diol (DO) having an atmospheric pressure boiling point below 215 °C.

9. Use of a composition (PR) according to claims 1 or 5 - 8; or a continuous transesterification process according to claims 2 - 8, wherein at least 5 wt.%, preferably at least 10 wt. % of the species of the diol (DO) are provided by 2,2-dimethyl propane-1,3-diol (NPG).

10. Use of a composition (PR) according to claims 1 or 5 - 9; or a continuous transesterification process according to claims 2 - 9, wherein species of the transesterification catalyst (TC) are provided by a lewis-acid, preferably by tetra-n-butyl titanate (TNBT).

11. Use of a composition (PR) according to claims 1 or 5 - 10; or a continuous transesterification process according to claims 2 - 10,
wherein the transesterification is performed at temperatures of 240 - 310 °C, preferably 260 - 290 °C.

12. Use of a composition (PR) according to claims 1 or 5 - 11; or a continuous transesterification process according to claims 2 - 11, wherein
the extruder is a twin screw extruder.

13. Use of a composition (PR) according to claims 1 or 5 - 12; or a continuous transesterification process according to claims 2 - 12, wherein the residence time of the PE in the extruder is 1 - 20 minutes, preferably 2 - 8 minutes.

14. Use of a composition (PR) according to claims 1 or 5 - 13; or a continuous transesterification process according to claims 2 - 13, wherein during the transesterification process in the extruder volatile components are generated which are preferably vacuum-removed.

15. Use of a composition (PR) according to claims 1 or 5 - 14; or a continuous transesterification process according to claims 2 - 14, wherein the transesterification process is performed in the absence of any solvent being not a transesterification-reactive component.

16. Use of a composition (PR) according to claims 1 or 5 - 15; or a continuous transesterification process according to claims 2 - 15, wherein less than 100 mol % of the carboxylic acid ester functional groups were contributed by the polyalkylene terephthalate (PE) and wherein carboxylic ester functional groups were additionally contributed by the use of methyl esters.

17. Use of a composition (PR) according to claim 16; or a continuous transesterification process according to claim 16, wherein
5 - 80 mol %, preferably 5 - 50 mol % of the provided carboxylic acid ester functional groups are contributed by methyl esters.

18. Continuous transesterification process according to claims 2 - 17, wherein the transesterification mixture discharged in step 3) is used in a further step as a binder for coatings or as a lamination adhesive, preferably for the manufacturing of food packaging.

## Patentansprüche

1. Verwendung einer Zusammensetzung (PR) mit 4,0 - 10,4 mol/kg carbonsäureesterfunktionellen Gruppen und 4,0 - 20,8 mol/kg Hydroxylgruppen, umfassend:
i) Polyalkylenterephthalat (PE),
ii) Diol (DO) mit einem Siedepunkt bei Normaldruck unter 235 °C und
iii) Umesterungskatalysator (TC), wobei
20 - 100 Mol-% der enthaltenen carbonsäureesterfunktionellen Gruppen durch das Polyalkylenterephthalat (PE) bereitgestellt werden und 5 - 100 Mol-% der enthaltenen Hydroxylgruppen durch das Diol (DO) mit einem Siedepunkt bei Normaldruck unter 235 °C bereitgestellt werden;
als Vorprodukt bei einem kontinuierlichen Umesterungsverfahren, das in einem Extruder durchgeführt wird.

2. Kontinuierliches Umesterungsverfahren, das in einem Extruder durchgeführt wird, umfassend die Schritte:
Schritt 1): die Komponenten eines Vorprodukts werden in den Extruder eingebracht, wobei die Komponenten zumindest als Folgendes vorliegen:
i) Polyalkylenterephthalat (PE),
ii) Diol (DO) mit einem Siedepunkt bei Normaldruck unter 235 °C und
iii) Umesterungskatalysator (TC),
mit der Maßgabe, dass die Gesamtzusammensetzung des Vorprodukts, die sich auf seine pro Zeiteinheit zugesetzten Komponenten bezieht, die folgenden Anforderungen erfüllt:
4,0 - 10,4 mol/kg carbonsäureesterfunktionelle Gruppen und 4,0 - 20,8 mol/kg Hydroxylgruppen werden pro Zeiteinheit bereitgestellt,
20 - 100 Mol-% der bereitgestellten carbonsäureesterfunktionellen Gruppen werden durch das Polyalkylenterephthalat (PE) beigetragen,
5 - 100 Mol-% der bereitgestellten Hydroxylgruppen werden durch das Diol (DO) mit einem Siedepunkt bei Normaldruck unter 235 °C beigetragen;
Schritt 2): Umsetzen der eingebrachten Komponenten in einer Reaktionszone des Extruders unter Erzeugung eines Umesterungsgemischs und
Schritt 3): Austragen des in Schritt 2) erzeugten Umesterungsgemischs.

3. Kontinuierliches Umesterungsverfahren nach Anspruch 2, wobei pro Zeiteinheit 4,5 - 9,5 mol/kg carbonsäureesterfunktionelle Gruppen und 3,0 - 15,0 mol/kg Hydroxylgruppen bereitgestellt werden und 50 - 100 Mol-% der bereitgestellten carbonsäureesterfunktionellen Gruppen durch das Polyalkylenterephthalat (PE) beigetragen werden und 20 - 100 Mol-% der bereitgestellten Hydroxylgruppen durch das Diol (DO) mit einem Siedepunkt bei Normaldruck unter 235 °C beigetragen werden.

4. Kontinuierliches Umesterungsverfahren nach Anspruch 2, wobei in einem Schritt vor Schritt 1) die Komponenten des Vorprodukts so vorgemischt werden, dass in Schritt 1) eine Zusammensetzung (PR) mit 4,0 - 10,4 mol/kg carbonsäureesterfunktionellen Gruppen und 4,0 - 20,8 mol/kg Hydroxylgruppen in den Extruder eingebracht wird, die Folgendes umfasst:
i) Polyalkylenterephthalat (PE),
ii) Diol (DO) mit einem Siedepunkt bei Normaldruck unter 235 °C und
iii) Umesterungskatalysator (TC), wobei
20 - 100 Mol-% der enthaltenen carbonsäureesterfunktionellen Gruppen durch das Polyalkylenterephthalat (PE) bereitgestellt werden und 5 - 100 Mol-% der enthaltenen Hydroxylgruppen durch das Diol (DO) mit einem Siedepunkt bei Normaldruck unter 235 °C bereitgestellt werden.

5. Verwendung einer Zusammensetzung (PR) nach Anspruch 1 oder kontinuierliches Umesterungsverfahren nach Anspruch 4, wobei die Zusammensetzung (PR) 4,5 - 9,5 mol/kg carbonsäureesterfunktionelle Gruppen und 3,0 - 15,0 mol/kg Hydroxylgruppen aufweist und 50 - 100 Mol-% der enthaltenen carbonsäureesterfunktionellen Gruppen durch das Polyalkylenterephthalat (PE) bereitgestellt werden und 20 - 100 Mol-% der enthaltenen Hydroxylgruppen durch das Diol (DO) mit einem Siedepunkt bei Normaldruck unter 235 °C bereitgestellt werden.

6. Verwendung einer Zusammensetzung (PR) nach Anspruch 1 oder 5 oder kontinuierliches Umesterungsverfahren nach den Ansprüchen 2 - 5, wobei die *intrinsische* Viskosität des Polyalkylenterephthalats (PE) 0,40 - 0,98, vorzugsweise 0,70 - 0,85, beträgt (DIN EN ISO 1628-5).

7. Verwendung einer Zusammensetzung (PR) nach Anspruch 1, 5 oder 6 oder kontinuierliches Umesterungsverfahren nach den Ansprüchen 2 - 6, wobei mindestens 20 Gew.-%, vorzugsweise mindestens 40 Gew.-%, der Spezies des Polyalkylenterephthalats (PE) durch Polyethylenterephthalat (PET) bereitgestellt werden.

8. Verwendung einer Zusammensetzung (PR) nach den Ansprüchen 1 oder 5 - 7 oder kontinuierliches Umesterungsverfahren nach den Ansprüchen 2 - 7, wobei mindestens 5 Gew.-%, vorzugsweise mindestens 10 Gew.-%, der Spezies des Diols (DO) einen Siedepunkt bei Normaldruck unter 215 °C aufweisen.

9. Verwendung einer Zusammensetzung (PR) nach den Ansprüchen 1 oder 5 - 8 oder kontinuierliches Umesterungsverfahren nach den Ansprüchen 2 - 8, wobei mindestens 5 Gew.-%, vorzugsweise mindestens 10 Gew.-%, der Spezies des Diols (DO) durch 2,2-Dimethylpropan-1,3-diol (NPG) bereitgestellt werden.

10. Verwendung einer Zusammensetzung (PR) nach den Ansprüchen 1 oder 5 - 9 oder kontinuierliches Umesterungsverfahren nach den Ansprüchen 2 - 9, wobei Spezies des Umesterungskatalysators (TC) durch eine Lewis-Säure, vorzugsweise durch Tetra-n-butyltitanat (TNBT), bereitgestellt werden.

11. Verwendung einer Zusammensetzung (PR) nach den Ansprüchen 1 oder 5 - 10 oder kontinuierliches Umesterungsverfahren nach den Ansprüchen 2 - 10,
wobei die Umesterung bei Temperaturen von 240 - 310 °C, vorzugsweise 260 - 290 °C, durchgeführt wird.

12. Verwendung einer Zusammensetzung (PR) nach den Ansprüchen 1 oder 5 - 11 oder kontinuierliches Umesterungsverfahren nach den Ansprüchen 2 - 11, wobei es sich bei dem Extruder um einen Doppelschneckenextruder handelt.

13. Verwendung einer Zusammensetzung (PR) nach den Ansprüchen 1 oder 5 - 12 oder kontinuierliches Umesterungsverfahren nach den Ansprüchen 2 - 12, wobei die Verweilzeit des PE im Extruder 1 - 20 Minuten, vorzugsweise 2 - 8 Minuten, beträgt.

14. Verwendung einer Zusammensetzung (PR) nach den Ansprüchen 1 oder 5 - 13 oder kontinuierliches Umesterungsverfahren nach den Ansprüchen 2 - 13, wobei während des Umesterungsverfahrens im Extruder flüchtige Komponenten anfallen, die vorzugsweise mittels Vakuum entfernt werden.

15. Verwendung einer Zusammensetzung (PR) nach den Ansprüchen 1 oder 5 - 14 oder kontinuierliches Umesterungsverfahren nach den Ansprüchen 2 - 14, wobei das Umesterungsverfahren in Abwesenheit eines Lösungsmittels, bei dem es sich nicht um eine Umesterungsreaktionskomponente handelt, durchgeführt wird.

16. Verwendung einer Zusammensetzung (PR) nach den Ansprüchen 1 oder 5 - 15 oder kontinuierliches Umesterungsverfahren nach den Ansprüchen 2 - 15, wobei weniger als 100 Mol-% der carbonsäureesterfunktionellen Gruppen durch das Polyalkylenterephthalat (PE) beigetragen wurden und wobei carbonsäureesterfunktionelle Gruppen zusätzlich durch die Verwendung von Methylestern beigetragen wurden.

17. Verwendung einer Zusammensetzung (PR) nach Anspruch 16 oder kontinuierliches Umesterungsverfahren nach Anspruch 16, wobei
5 - 80 Mol-%, vorzugsweise 5 - 50 Mol-%, der bereitgestellten carbonsäureesterfunktionellen Gruppen durch Methylester beigetragen werden.

18. Kontinuierliches Umesterungsverfahren nach den Ansprüchen 2 - 17, wobei das in Schritt 3) ausgetragene Umesterungsgemisch in einem weiteren Schritt als Bindemittel für Beschichtungen oder als Kaschierkleber, vorzugsweise zur Herstellung von Lebensmittelverpackungen, verwendet wird.

## Revendications

1. Utilisation d'une composition (PR) contenant 4,0 à 10,4 mol/kg de groupes fonctionnels ester d'acide carboxylique et 4,0 à 20,8 mol/kg de groupes hydroxyle, comprenant :
i) un poly(téréphtalate d'alkylène) (PE),
ii) un diol (DO) ayant un point d'ébullition à pression atmosphérique inférieur à 235 °C et
iii) un catalyseur de transestérification (TC), dans laquelle
20 à 100 % en moles des groupes fonctionnels ester d'acide carboxylique sont apportés par le poly(téréphtalate d'alkylène) (PE) et 5 à 100 % en moles des groupes hydroxyle sont apportés par le diol (DO) ayant un point d'ébullition à pression atmosphérique inférieur à 235 °C ;
en tant que pré-produit dans un procédé de transestérification continu qui est réalisé dans une extrudeuse.

2. Procédé de transestérification continu réalisé dans une extrudeuse, comprenant les étapes de :
étape 1) : introduction dans l'extrudeuse des composants d'un pré-produit, qui sont au moins présents sous forme de :
i) un poly(téréphtalate d'alkylène) (PE),
ii) un diol (DO) ayant un point d'ébullition à pression atmosphérique inférieur à 235 °C et
iii) un catalyseur de transestérification (TC),
à condition que la composition globale du pré-produit, en termes de composants ajoutés par unité de temps, soit conforme aux exigences suivantes :
4,0 à 10,4 mol/kg de groupes fonctionnels ester d'acide carboxylique et 4,0 à 20,8 mol/kg de groupes hydroxyles sont apportés par unité de temps,
20 à 100 % en moles des groupes fonctionnels ester d'acide carboxylique sont apportés par le poly(téréphtalate d'alkylène) (PE),
5 à 100 % en moles des groupes hydroxyles sont apportés par le diol (DO) ayant un point d'ébullition à pression atmosphérique inférieur à 235 °C ;
étape 2) : réaction des composants introduits dans une zone de réaction de l'extrudeuse pour générer un mélange de transestérification et
étape 3) : évacuation du mélange de transestérification généré à l'étape 2).

3. Procédé de transestérification continu selon la revendication 2, dans lequel 4,5 à 9,5 mol/kg de groupes fonctionnels ester d'acide carboxylique et 3,0 à 15,0 mol/kg de groupes hydroxyle sont apportés par unité de temps, et 50 à 100 % en moles des groupes fonctionnels ester d'acide carboxylique sont apportés par le poly(téréphtalate d'alkylène) (PE) et 20 à 100 % en moles des groupes hydroxyle sont apportés par le diol (DO) ayant un point d'ébullition à pression atmosphérique inférieur à 235 °C.

4. Procédé de transestérification continu selon la revendication 2, dans lequel, dans une étape précédant l'étape 1), les composants du pré-produit sont prémélangés de sorte que, à l'étape 1), une composition (PR) est introduite dans l'extrudeuse, contenant 4,0 à 10,4 mol/kg de groupes fonctionnels ester d'acide carboxylique et 4,0 à 20,8 mol/kg de groupes hydroxyle, comprenant :
i) un poly(téréphtalate d'alkylène) (PE),
ii) un diol (DO) ayant un point d'ébullition à pression atmosphérique inférieur à 235 °C et
iii) un catalyseur de transestérification (TC), dans laquelle
20 à 100 % en moles des groupes fonctionnels ester d'acide carboxylique sont apportés par le poly(téréphtalate d'alkylène) (PE) et 5 à 100 % en moles des groupes hydroxyle sont apportés par le diol (DO) ayant un point d'ébullition à pression atmosphérique inférieur à 235 °C.

5. Utilisation d'une composition (PR) selon la revendication 1 ou d'un procédé de transestérification continu selon la revendication 4, dans laquelle la composition (PR) contient 4,5 à 9,5 mol/kg de groupes fonctionnels ester d'acide carboxylique et 3,0 à 15,0 mol/kg de groupes hydroxyle, et 50 à 100 % en moles des groupes fonctionnels ester d'acide carboxylique sont apportés par le poly(téréphtalate d'alkylène) (PE) et 20 à 100 % en moles des groupes hydroxyle sont apportés par le diol (DO) ayant un point d'ébullition à pression atmosphérique inférieur à 235 °C.

6. Utilisation d'une composition (PR) selon les revendications 1 ou 5 ; ou d'un procédé de transestérification continu selon les revendications 2 à 5, dans laquelle la viscosité *intrinsèque* du poly(téréphtalate d'alkylène) (PE) est de 0,40 à 0,98, de préférence de 0,70 à 0,85 (DIN EN ISO 1628-5).

7. Utilisation d'une composition (PR) selon les revendications 1, 5 ou 6 ; ou un procédé de transestérification continu selon les revendications 2 à 6, dans laquelle au moins 20 % en poids, de préférence au moins 40 % en poids, des espèces de poly(téréphtalate d'alkylène) (PE) sont apportés par le poly(téréphtalate d'éthylène) (PET).

8. Utilisation d'une composition (PR) selon les revendications 1 ou 5 à 7 ; ou d'un procédé de transestérification continu selon les revendications 2 à 7, dans laquelle au moins 5 % en poids, de préférence au moins 10 % en poids des espèces du diol (DO) ayant un point d'ébullition à pression atmosphérique inférieur à 215 °C.

9. Utilisation d'une composition (PR) selon les revendications 1 ou 5 à 8 ; ou d'un procédé de transestérification continu selon les revendications 2 à 8, dans laquelle au moins 5 % en poids, de préférence au moins 10 % en poids des espèces du diol (DO) sont apportés par le 2,2-diméthylpropane-1,3-diol (NPG).

10. Utilisation d'une composition (PR) selon les revendications 1 ou 5 à 9 ; ou d'un procédé de transestérification continu selon les revendications 2 à 9, dans laquelle les espèces du catalyseur de transestérification (TC) sont apportées par un acide de Lewis, de préférence par le titanate de tétra-n-butyle (TNBT).

11. Utilisation d'une composition (PR) selon les revendications 1 ou 5 à 10 ; ou d'un procédé de transestérification continu selon les revendications 2 à 10,
dans laquelle la transestérification est réalisée à des températures de 240 à 310 °C, de préférence de 260 à 290 °C.

12. Utilisation d'une composition (PR) selon les revendications 1 ou 5 à 11 ; ou d'un procédé de transestérification continu selon les revendications 2 à 11, dans laquelle
l'extrudeuse est une extrudeuse bivis.

13. Utilisation d'une composition (PR) selon les revendications 1 ou 5 à 12 ; ou d'un procédé de transestérification continu selon les revendications 2 à 12, dans laquelle le temps de séjour du PE dans l'extrudeuse est de 1 à 20 minutes, de préférence de 2 à 8 minutes.

14. Utilisation d'une composition (PR) selon les revendications 1 ou 5 à 13 ; ou d'un procédé de transestérification continu selon les revendications 2 à 13, dans laquelle, au cours du processus de transestérification dans l'extrudeuse, des composants volatils sont générés qui sont de préférence éliminés sous vide.

15. Utilisation d'une composition (PR) selon les revendications 1 ou 5 à 14 ; ou d'un procédé de transestérification continu selon les revendications 2 à 14, dans laquelle le processus de transestérification est réalisé en l'absence de tout solvant n'étant pas un composant réactif dans la transestérification.

16. Utilisation d'une composition (PR) selon les revendications 1 ou 5 à 15 ; ou d'un procédé de transestérification continu selon les revendications 2 à 15, dans laquelle moins de 100 % en moles des groupes fonctionnels ester d'acide carboxylique sont apportés par le poly(téréphtalate d'alkylène) (PE) et des groupes fonctionnels ester d'acide carboxylique supplémentaires sont apportés au moyen d'esters méthyliques.

17. Utilisation d'une composition (PR) selon la revendication 16 ; ou d'un procédé de transestérification continu selon la revendication 16,
dans laquelle
5 à 80 % en moles, de préférence 5 à 50 % en moles des groupes fonctionnels ester d'acide carboxylique sont apportés par des esters méthyliques.

18. Procédé de transestérification continu selon les revendications 2 à 17, dans lequel le mélange de transestérification évacué à l'étape 3) est utilisé dans une étape ultérieure comme liant pour des revêtements ou comme adhésif de laminage, de préférence pour la fabrication d'emballages alimentaires.
